# FASCICULE DE BREVET EUROPEEN

(11) **EP 2 552 668 B1**
(45) Date de publication et mention de la délivrance du brevet: **13.08.2014**
(21) Numéro de dépôt: 11713004.7
(22) Date de dépôt: 15.03.2011
(51) Int. Cl.: B29C 49/02, F16D 3/84, F16J 3/04, B29C 65/02

(54) **MACHINE ET PROCEDE DE FABRICATION D'UN MANCHON ET MANCHON AINSI OBTENU**
MASCHINE UND VERFAHREN ZUR HERSTELLUNG EINER HÜLSE UND AUF DIESE WEISE HERGESTELLTE HÜLSE
MACHINE AND PROCESS FOR MANUFACTURING A SLEEVE, AND SLEEVE THUS OBTAINED

(30) Priorité: 31.03.2010 FR 1052417
(43) Date de publication de la demande: 06.02.2013
(73) Titulaire: Trelleborg Boots France, 44470 Carquefou (FR)
(72) Inventeur: MAITAY, Frédéric, F-44440 Riaille (FR); MARHIC, Bernard, F-44115 Basse-Goulaine (FR); BOUHOUR, Jean-Luc, F-44690 La Haye Fouassière (FR); GAUGUET, Wilfried, F-44690 Saint Fiacre Sur Maine (FR); PARIS, Régis, F-44521 Couffe (FR)
(74) Mandataire: Godineau, Valérie
(86) Numéro de dépôt international: PCT/FR2011/050511
(87) Numéro de publication internationale: WO 2011/121203

(56) Documents cités:
- WO-A1-98/06558
- WO-A1-2006/033158
- DE-A1- 2 336 967
- GB-A- 917 806

## Description

La présente invention concerne de manière générale la fabrication de manchon de forme générale tronconique, tel qu'un soufflet de protection d'un joint de transmission.

L'invention concerne plus particulièrement une machine pour la fabrication d'un manchon, tel que soufflet d'étanchéité, ledit manchon présentant un corps de forme générale tronconique, formé d'une série de plis de soufflets et s'étendant entre une grande base et une petite base délimitant les ouvertures d'extrémité opposées dudit manchon, ladite machine comprenant au moins :
- une filière d'extrusion présentant un orifice d'injection annulaire pour l'injection de matière extrudable,
- une tête dite d'injection présentant une cavité annulaire,
ladite tête d'injection et la filière d'extrusion étant montées déplaçables en translation l'une par rapport à l'autre, suivant une direction dite d'extrusion, entre,
d'une part, une position rapprochée dans laquelle l'orifice d'injection annulaire communique avec la cavité annulaire de manière à injecter de la matière dans ladite cavité annulaire pour former l'une desdites ouvertures d'extrémité du manchon,
et, d'autre part, une position écartée permettant au cours de l'écartement d'extruder un tube de matière, appelé paraison, entre l'orifice d'injection annulaire de la filière et la cavité annulaire de la tête d'injection.

Une telle machine est notamment décrite dans la demande internationale WO2006/033158. D'autres machines de conception plus éloignée sont notamment décrites dans les documents DE-2336967, WO98/06558 et GB-917806.

Dans les véhicules, entre la boîte de vitesse et les roues du véhicule, il est prévu une transmission formée de deux arbres reliés entre eux par un système de transmission mécanique. Généralement, ce système de transmission mécanique comprend, d'une part, un corps creux appelé tulipe formant organe femelle qui équipe l'extrémité d'un premier arbre de transmission issu de la boîte de vitesse et, d'autre part, un organe mâle formé d'une série de galets qui équipe, par l'intermédiaire de tourillons à galet, l'extrémité d'un deuxième arbre de transmission relié aux roues. La tulipe affecte la forme d'une cavité qui délimite des logements destinés aux galets. Lesdits galets permettent ainsi de transmettre le mouvement de rotation du premier arbre aux roues, via le deuxième arbre de transmission, tout en autorisant un certain débattement angulaire du deuxième arbre par rapport au premier arbre.

La tulipe et les galets forment un joint dit homocinétique entre les deux arbres de transmission qui nécessite une lubrification. Un manchon tronconique est alors utilisé pour protéger ledit joint en étant monté par sa grande base sur la face externe de la tulipe qui équipe le premier arbre et par sa petite base sur le deuxième arbre.

En particulier, la grande base du manchon de protection est polylobée, côté face interne, de manière à s'appliquer sur la face périphérique externe de la tulipe, ou bol, du joint de forme complémentaire. Ainsi, le montage à emboitement par coopération de forme de la grande base du manchon sur la tulipe empêche la rotation du manchon par rapport à la tulipe, ce qui limite son usure et favorise l'étanchéité du joint homocinétique. Par ailleurs, la forme de la tulipe limite la quantité de matière à utiliser.

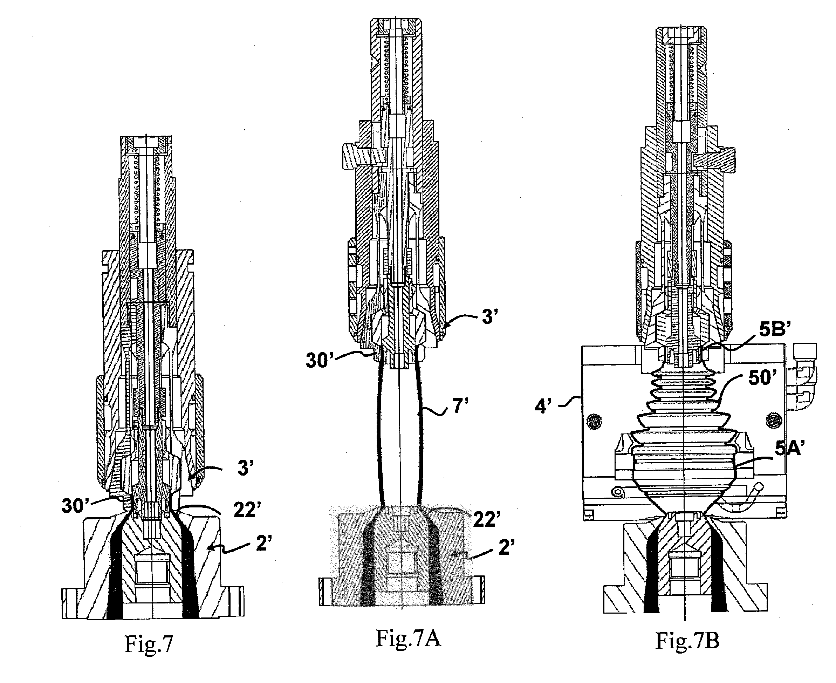

Pour fabriquer un tel manchon de forme générale tronconique, il est connu d'utiliser une machine telle que décrite en introduction. Une telle machine connue de l'état de la technique est illustrée aux figures 7, 7A et 7B qui sont des vues en coupe axiales de ladite machine au cours du processus de fabrication d'un manchon.

En référence auxdites figures 7, 7A, 7B, la fabrication du manchon s'effectue de la manière suivante. On forme tout d'abord la petite base 5B' dudit manchon en injectant de la matière dans la cavité 30' de la tête d'injection 3'. Comme illustré plus particulièrement aux figures 7 et 7A, dans la machine connue de l'état de la technique, les forme et dimension de l'orifice d'injection 22' annulaire de la filière 2' et celles de la cavité 30' annulaire de la tête d'injection 3' sont sensiblement les mêmes.

La tête d'injection 3' est ensuite écartée de la filière d'extrusion 2' pendant que celle-ci continue d'injecter de la matière par l'orifice d'injection 22' pour extruder le tube formant paraison 7' dont une extrémité est liée à la petite base 5B' du manchon. Un moule creux 4', dont la cavité de moulage présente une forme complémentaire d'une série de plis de soufflets pour former une enveloppe de soufflet tronconique, est positionné autour de la paraison 7' en étant agencé de sorte que les plis de soufflets présentent un diamètre croissant depuis la tête d'injection 3' jusqu'à la filière 2'. La paraison 7' est alors soufflée pour obtenir le corps de manchon 50' souhaité.

Le corps de manchon ainsi soufflé est ensuite découpé suivant une section de grand diamètre 5A' correspondant au diamètre souhaité de la grande base du manchon. Cependant, le soufflage de la paraison ne permet pas de former une section d'épaisseur variable suivant la circonférence de ladite section de grand diamètre. Il en résulte qu'il n'est pas possible d'obtenir directement avec une telle machine un manchon dont la grande base présente une face externe circulaire et une face interne polylobée.

Il est alors nécessaire de mouler une pièce distincte correspondant à la grande base polylobée souhaitée. Ladite pièce formant grande base polylobée est alors rapportée par soudure sur le manchon au niveau de la section de grand diamètre précédemment découpée.

La fabrication de deux pièces distinctes pour former le manchon tronconique nécessite un matériel important et de nombreuses manipulations. La fabrication d'un manchon tronconique à l'aide d'une telle machine est donc coûteuse en temps et en matériel. En outre, le fait de devoir souder la grande base sur le corps du manchon est compliqué et risque de générer une zone de fragilité dans le manchon au niveau de la zone de soudure.

Par contre, la technologie telle que décrite ci-dessus est fiable et simple à mettre en oeuvre. Elle permet l'obtention de pièces calibrées, en particulier d'épaisseur contrôlée par opposition à des procédés de fabrication qui nécessitent la présence d'un moyeu comme l'illustre la demande internationale WO 98/06558 ou une pluralité de moules comme l'illustre la demande internationale WO 2006/033158.

La présente invention a pour but de proposer une machine et un procédé de fabrication d'un manchon tronconique avec une grande base de forme complexe, en particulier polylobée sur au moins une partie de sa face interne, d'un seul tenant et avec un nombre réduit de manipulations et d'outils.

Un autre but de l'invention est de proposer un manchon tronconique avec une grande base de forme complexe, en particulier polylobée sur au moins une partie de sa face interne, d'un seul tenant à un coût réduit.

Un autre but de l'invention est de proposer un manchon tel que décrit ci-dessus pour lequel la zone de liaison entre grande base et corps de manchon présente une grande solidité.

Un autre but de l'invention est de proposer une machine permettant de réaliser un tel manchon, avec un nombre de pièces limité et de conception simple.

A cet effet, l'invention a pour objet une machine pour la fabrication d'un manchon, tel que soufflet d'étanchéité, ledit manchon présentant un corps de forme générale tronconique, formé d'une série de plis de soufflets et s'étendant entre une grande base et une petite base délimitant les ouvertures d'extrémité opposées dudit manchon,
ladite machine comprenant au moins :
- une filière d'extrusion présentant un orifice d'injection annulaire pour l'injection de matière extrudable,
- une tête dite d'injection présentant une cavité annulaire,
ladite tête d'injection et la filière d'extrusion étant montées déplaçables en translation l'une par rapport à l'autre, suivant une direction dite d'extrusion, entre,
d'une part, une position rapprochée dans laquelle l'orifice d'injection annulaire communique avec la cavité annulaire de manière à injecter de la matière dans ladite cavité annulaire pour former l'une desdites ouvertures d'extrémité du manchon,
et, d'autre part, une position écartée permettant au cours de l'écartement d'extruder un tube de matière, appelé paraison, entre l'orifice d'injection annulaire de la filière et la cavité annulaire de la tête d'injection,
le périmètre externe de la cavité annulaire de la tête d'injection étant supérieur au périmètre externe de l'orifice d'injection annulaire de la filière d'extrusion,
une partie de la cavité annulaire étant configurée de manière à former, à l'état injecté de matière dans ladite cavité annulaire, une collerette à l'intérieur de la grande base du manchon,
et en ce que, ladite machine comprenant des moyens de soufflage de la paraison et un moule creux dont la cavité de moulage affecte la forme d'une série de plis de soufflets, ledit moule creux étant apte à venir, en position écartée de la tête d'injection et de la filière d'extrusion, entre lesdites tête d'injection et filière d'extrusion et autour de la paraison à l'état extrudé de celle-ci, de manière à permettre de souffler la paraison pour lui faire épouser la paroi de la cavité de moulage,
la cavité annulaire de la tête d'injection et la cavité de moulage du moule creux sont configurées de telle sorte que, après soufflage de la paraison, un pli de soufflet du manchon est soudé contre une face de ladite collerette du manchon.

Une telle conception de la machine permet d'obtenir un manchon muni d'une collerette interne renforcée qui est susceptible de former une butée de limitation d'introduction d'un arbre dans le manchon. La soudure d'un pli de soufflet contre la collerette de la grande base améliore la solidité de la zone de liaison entre grande base et corps de soufflet.

Le fait de commencer la réalisation du manchon par une étape d'injection de la grande base permet de donner à la grande base la forme complexe souhaitée, et de former aisément le reste du corps de manchon par extrusion et soufflage.

Une telle machine permet ainsi d'obtenir aisément un manchon tronconique dont la petite base présente une épaisseur circonférentielle constante et dont la grande base présente des variations d'épaisseur le long de sa circonférence.

En particulier, une telle machine permet de réaliser un manchon tronconique d'une seule pièce dont au moins une partie de la face périphérique interne de la grande base présente au moins un renflement, tel que lobe. De préférence, ladite partie de face périphérique interne est polylobée, en vue de monter ladite grande base du manchon sur une tulipe d'arbre en faisant coopérer les lobes internes de la grande base du manchon avec des formes complémentaire en creux, telles que cannelures, ménagées sur la face externe de la tulipe.

Avec une telle machine, le manchon souhaité peut être réalisé d'un seul tenant. Il n'est donc pas nécessaire, contrairement au procédé de fabrication connu de l'état de la technique, de réaliser séparément la grande base de forme complexe pour la rapporter par soudure sur le corps de manchon.

Le manchon peut donc être fabriqué rapidement avec un nombre d'outils réduit et un nombre de manipulations limité. La réalisation du manchon d'une seule pièce permet d'augmenter sa durée de vie.

Selon une autre caractéristique avantageuse de l'invention, la face périphérique interne de ladite cavité annulaire comporte, suivant l'axe de la cavité annulaire, une partie circulaire qui délimite le périmètre interne de la collerette située du côté de l'embouchure de la cavité et une autre partie dite lobée qui présente au moins un renflement, tel que lobe, de préférence trois renflements, le diamètre du cercle centré sur l'axe de la cavité annulaire et inscrit dans la partie lobée de la face périphérique interne de ladite cavité annulaire étant supérieur ou égal au diamètre de la partie circulaire de la face périphérique interne de la cavité.

Autrement dit, le sommet du ou de chaque renflement est écarté de l'axe de la cavité annulaire d'une distance supérieure ou égale au rayon de la partie circulaire de la face périphérique interne de la cavité.

Ladite partie lobée est située derrière la partie circulaire par référence à l'embouchure de la cavité annulaire. En particulier, le diamètre du cercle centré sur l'axe de la cavité annulaire et passant par le sommet d'un lobe est supérieur ou égal au diamètre de la partie circulaire.

Préférentiellement, la partie lobée et la partie circulaire de la face périphérique interne sont séparées l'une de l'autre par un épaulement de la face périphérique interne.

Avantageusement, les moyens de soufflage présentant un orifice de sortie de soufflage débouchant, soit à travers la zone délimitée par le périmètre interne de l'orifice d'injection annulaire de la filière, soit à travers la zone délimitée par le périmètre interne de l'embouchure de la cavité annulaire de la tête, de manière à pouvoir souffler la paraison.

L'invention concerne également un manchon, tel que soufflet d'étanchéité, présentant un corps de forme générale tronconique muni d'une série de plis de soufflets, s'étendant entre une grande base et une petite base délimitant les ouvertures d'extrémité opposées dudit manchon,
ladite grande base présentant au moins un renflement interne, de préférence une pluralité de lobes,
caractérisé en ce que ledit manchon présente également une collerette s'étendant en saillie de la face interne du manchon, dans la zone de raccordement d'un pli de soufflet avec la grande base dudit manchon,
et en ce qu'un pli de soufflet du corps du manchon est soudé contre une face de la collerette.

Autrement dit, la face de la collerette orientée du côté de la petite base est doublée par le pli de l'enveloppe de soufflet le plus proche de la collerette. En particulier le flanc du pli de soufflet qui se situe à proximité de la collerette est rabattu et soudé contre la collerette au cours du soufflage de la paraison.

Avantageusement, le pourtour interne de la collerette porte la marque d'une découpe s'étendant sur au moins une partie de la longueur dudit pourtour. Cette découpe est appelée découpe circonférentielle.

Il doit être noté qu'on entend par découpe circonférentielle, une découpe continue ou non qui se développe sur au moins une partie de la longueur de la courbe fermée formée par le bord libre, encore appelé bord périphérique interne, de ladite collerette.

L'invention concerne également un procédé de fabrication d'un manchon, tel que soufflet d'étanchéité, ledit manchon présentant un corps de forme générale tronconique muni d'une série de plis de soufflets, s'étendant entre une grande base et une petite base délimitant les ouvertures d'extrémité opposées dudit manchon,
ledit procédé comprenant les étapes suivantes, réalisées de préférence avec une machine telle que décrite ci-dessus :
- formation de la grande base du manchon et d'une collerette interne à la grande base, par injection de matière extrudable dans une cavité annulaire d'un élément de moule, appelé tête d'injection,
- extrusion de matière pour former un tube, appelé paraison, dont une extrémité est liée à la matière injectée dans la cavité annulaire,
- soufflage de la paraison avec soudure d'un flan de pli de soufflet contre la collerette.

Avantageusement, ladite cavité annulaire est configurée de telle sorte que ladite grande base présente au moins un renflement interne, de préférence une pluralité de lobes internes, et une collerette située en arrière dudit au moins un renflement par référence à l'embouchure de la grande base du manchon.

Selon une mise en oeuvre particulière du procédé, ledit procédé comprend en outre au moins une étape de découpe de la collerette sur au moins une partie de son pourtour interne pour réduire, dans la zone découpée, la largeur de la collerette correspondant à la distance entre pourtour interne et pourtour externe de ladite collerette.

L'invention concerne également un manchon, tel que soufflet d'étanchéité, présentant un corps de forme générale tronconique muni d'une série de plis de soufflets, s'étendant entre une grande base et une petite base délimitant les ouvertures d'extrémité opposées dudit manchon,
ladite grande base présentant au moins un renflement interne, de préférence une pluralité de lobes,
caractérisé en ce que ledit manchon présente, dans la zone de raccordement d'un pli de soufflet avec la grande base dudit manchon, la marque d'une découpe circonférentielle du côté de sa face interne.

L'invention concerne également un manchon, tel que soufflet d'étanchéité, présentant un corps de forme générale tronconique muni d'une série de plis de soufflets, s'étendant entre une grande base et une petite base délimitant les ouvertures d'extrémité opposées dudit manchon,
ladite grande base présentant au moins un renflement interne, de préférence une pluralité de lobes,
caractérisé en ce que ledit manchon, de préférence obtenu à l'aide du procédé
et/ou de la machine tels que décrits ci-dessus, présente également une collerette s'étendant en saillie de la face interne du manchon, dans la zone de raccordement d'un pli de soufflet avec la grande base dudit manchon,
et en ce que le pourtour interne de la collerette porte la marque d'une découpe circonférentielle.

L'invention sera bien comprise à la lecture de la description suivante d'exemples de réalisation, en référence aux dessins annexés dans lesquels :
- la figure 1 est une vue en coupe axiale de la machine selon l'invention en position rapprochée de la tête d'injection et de la filière d'extrusion pour l'injection de matière dans la cavité de la tête d'injection ;
- la figure 2 est une vue de la machine de la figure 1 en position écartée de la tête d'injection et de la filière pour extruder la paraison ;
- la figure 3 est une vue de la machine de la figure 2, un moule creux étant positionné autour de la paraison à souffler pour former les plis de soufflets du corps du manchon ;
- la figure 4 est une vue en perspective du manchon selon l'invention, côté grande base dudit manchon, avant découpe de la collerette ;
- la figure 4a est une vue partielle en coupe axiale du manchon de la figure 4 qui montre la zone de soudure entre la collerette et le pli de soufflet situé à proximité de ladite collerette ;
- la figure 5 est une vue du manchon de la figure 4, après découpe du pourtour interne de la collerette sur une distance radiale donnée par rapport à son bord libre ;
- la figure 6 est une vue du manchon selon l'invention en position de recouvrement d'un joint de transmission entre deux arbres.

En référence aux figures et comme rappelé ci-dessus, l'invention concerne une machine 1 pour la fabrication d'un manchon 5, tel que soufflet d'étanchéité. Ledit manchon à fabriquer présente un corps 50 de forme générale tronconique, s'étendant entre une grande base 5A et une petite base 5B. Lesdites grande et petite base 5A, 5B correspondent aux portions d'extrémité dudit manchon délimitant respectivement les ouvertures d'extrémité du manchon de plus grand et de plus petit diamètre.

Ladite machine comprend au moins une filière d'extrusion 2 présentant un orifice d'injection 22 annulaire pour l'injection de matière extrudable, telle qu'un élastomère thermoplastique.

L'orifice annulaire est délimité par l'espace annulaire défini entre un fourreau 20 dont la face interne délimite le périmètre extérieur de l'orifice et un élément mâle 21, de type poinçon, logé dans la cavité du fourreau et dont la face externe délimite le périmètre interne de l'orifice d'injection 22 annulaire. Ledit orifice 22 est alimenté en matière à injecter par l'intermédiaire d'un système d'amenée de matière non représenté aux figures.

La machine comprend également un élément de moulage, appelé usuellement tête d'injection 3, qui présente une cavité 30 annulaire dans laquelle est destinée à être injectée de la matière pour mouler une portion d'extrémité du manchon.

Comme illustré aux figures, la cavité 30 annulaire de la tête d'injection et l'orifice d'injection 22 annulaire sont coaxiaux et agencés en regard l'un de l'autre. Autrement dit, la cavité 30 annulaire est ouverte en direction de l'orifice d'injection 22.

Ladite tête d'injection 3 et la filière d'extrusion 2 sont montées déplaçables en translation l'une par rapport à l'autre, suivant une direction dite direction d'extrusion A7, parallèle à l'axe de l'orifice d'injection 22 annulaire, entre une position rapprochée et une position écartée. Ladite position rapprochée est une position dans laquelle la filière d'extrusion 2 ferme la cavité 30 annulaire de la tête d'injection 3 tout en laissant l'orifice d'injection 22 annulaire communiquer avec la cavité 30 annulaire de manière à injecter de la matière dans l'espace défini entre la filière 2 et la tête d'injection 3, et donc dans ladite cavité 30 annulaire, pour former l'une desdites portions d'extrémité du manchon. Ladite position écartée est une position écartée de la tête d'injection 3 par rapport à la filière 2 d'extrusion permettant, au cours de l'écartement, d'extruder un tube 7 de matière, appelé paraison, entre l'orifice d'injection 22 annulaire de la filière 2 et la cavité 30 annulaire de la tête d'injection 3.

En position rapprochée, la face avant du fourreau 20 de la filière 2, orientée vers la tête d'injection 3, est appliquée contre la cavité 30 de manière à fermer ladite cavité 30 autour de l'orifice d'injection 22 qui débouche dans la cavité 30 annulaire au niveau du périmètre interne de la cavité 30 annulaire.

Le diamètre de la face périphérique externe 301 de la cavité 30 annulaire de la tête d'injection 3 est supérieur au diamètre externe de l'orifice d'injection 22 annulaire de la filière 2 d'extrusion. Ainsi, la matière injectée dans la cavité 30 annulaire de la tête d'injection forme la grande base 5A du manchon 5. Au moins une partie 303 de la face périphérique interne de la cavité présente au moins un renflement 31, tel que lobe. Ledit au moins un renflement s'étend en direction de l'axe de la cavité annulaire. Comme détaillé ci-après, dans l'exemple illustré aux figures, ladite partie 303 de la face périphérique interne de la cavité est polylobée 31 de sorte que la partie correspondante de la face périphérique interne de la grande base 5A est également polylobée 51, 52, 53.

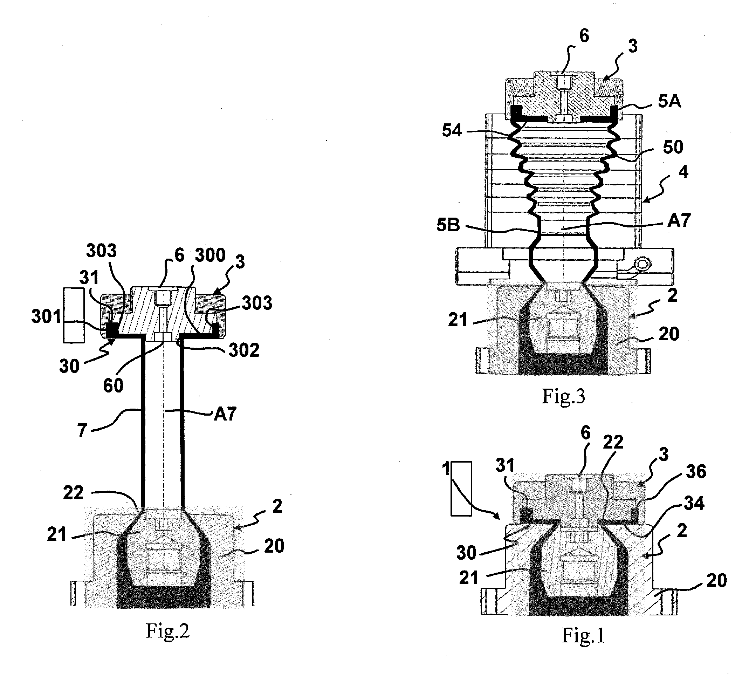

Comme illustré plus particulièrement à la figure 2, ladite cavité annulaire 30 de la tête d'injection 3 présente au moins deux étages séparés l'un de l'autre par un épaulement 300 de la face périphérique interne 302, 303 de la cavité annulaire. Ledit épaulement est défini par référence à l'axe de la cavité 30 annulaire. Dans l'exemple illustré aux figures, l'axe de l'orifice d'injection 22 annulaire, l'axe de la cavité annulaire 30 et la direction d'extrusion A7 sont confondus.

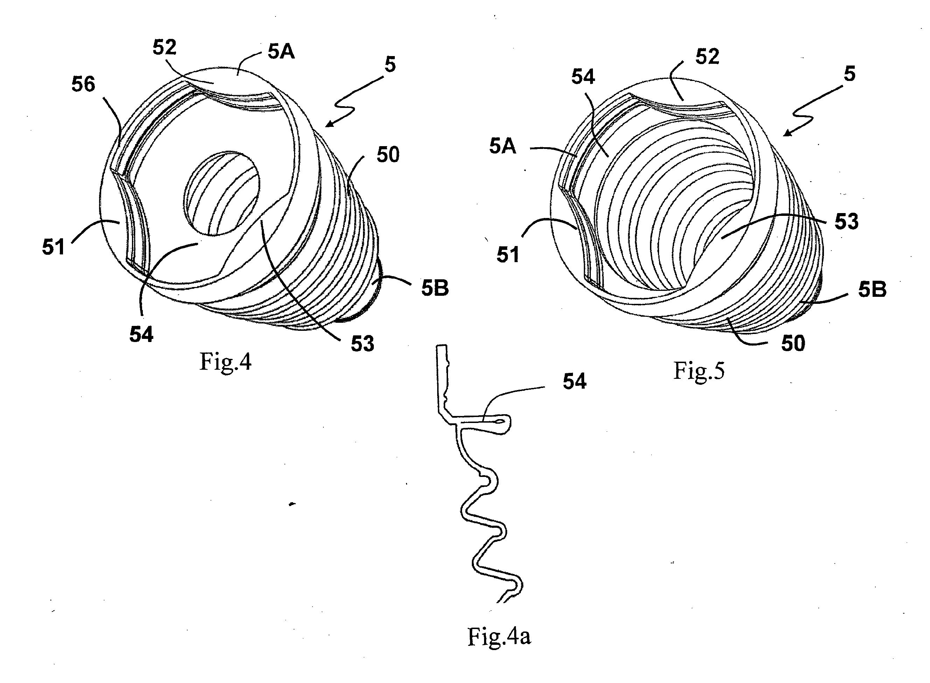

La portion 302 de la face périphérique interne de la cavité 30 annulaire, située du côté de l'épaulement le plus proche de l'embouchure de la cavité 30, délimite avec la face périphérique externe 301 de ladite cavité, le premier étage 34 dont le remplissage de matière forme une collerette 54 comme illustré aux figures 2 et 4. Ladite portion 302 de la face périphérique interne est circulaire. Le diamètre de ladite portion 302, qui correspond au diamètre interne de la collerette, est sensiblement égal, comme rappelé ci-avant, au diamètre interne de l'orifice d'injection 22 annulaire de la filière. Ainsi, au cours du passage de la position rapprochée à la position écartée de la tête d'injection 3 par rapport à la filière 2 d'extrusion, le tube 7 de matière ou paraison formé est de diamètre sensiblement constant, ce qui permet de garantir une épaisseur sensiblement constante de la paroi du corps de soufflet à former.

La face de la cavité 30 annulaire définissant l'embouchure de ladite cavité est sensiblement orthogonale à l'axe de la cavité annulaire de sorte que la face de la collerette 54 orientée vers la petite base 5B soit sensiblement orthogonale à l'axe du manchon. En effet, ladite face de la collerette est délimitée par la face de l'embouchure de la cavité 30 en coopération avec la face de la filière 2 d'extrusion qui vient fermer ladite cavité. Ainsi, la collerette 54 s'étend sensiblement orthogonalement à l'axe du manchon et peut si nécessaire, comme détaillé ci-après, former une butée de limitation d'introduction d'un arbre dans le manchon lors de son introduction du côté de la grande base.

La portion 303 de la face périphérique interne de la cavité 30 annulaire située de l'autre côté de l'épaulement, c'est-à-dire du côté opposé à l'embouchure de la cavité 30 par rapport audit épaulement, délimite avec la face périphérique externe 301 de la cavité, le deuxième étage 36, 31 de ladite cavité 30. Ladite portion 303 de la face périphérique interne de la cavité 30 annulaire est polylobée de sorte que le remplissage de matière dudit deuxième étage 36, 31 forme le bord libre 56 de la grande base et les lobes 51, 52, 53 côté face interne de ladite grande base 5A du manchon. Autrement dit, le fond du deuxième étage destiné à former notamment les lobes 51, 52, 53 est plus éloigné de l'embouchure de la cavité 30 que le fond du premier étage de la cavité destiné à former la collerette 54.

Dans l'exemple illustré aux figures, la portion 303 de la face périphérique interne polylobée de la cavité 30 annulaire définit par rapport à la face périphérique externe de la cavité trois parties lobées 31, correspondant aux lobes 51, 52, 53 du manchon 5, réparties circonférentiellement en étant écartées l'une de l'autre d'un même secteur angulaire. Autrement dit, lesdites parties lobées sont écartées équiangulairement l'une de l'autre autour de l'axe de la cavité 30 annulaire.

L'extrusion de la paraison 7 s'effectue par injection en continu de la matière à travers l'orifice d'injection 22 annulaire au cours de l'écartement de la tête 3 par rapport à la filière 2. La matière injectée par l'orifice d'injection 22 pour l'extrusion du tube 7 reste solidaire de la matière injectée dans la cavité 30 annulaire de la tête d'injection 3.

Ainsi, le tube extrudé est lié par une extrémité à la matière injectée dans la tête d'injection 3. Ledit tube extrudé présente un diamètre interne sensiblement égal au diamètre interne de la collerette 54.

Le manchon 5 à réaliser est un soufflet dont le corps 50 est formé d'une série de plis de soufflets de forme générale tronconique. Pour réaliser lesdits plis de soufflets, la machine selon l'invention comprend en outre un moule creux 4 dont la cavité de moulage affecte la forme de ladite série de plis de soufflets à réaliser. Ledit moule creux comprend une paroi de cavité de moulage qui représente la surface externe de l'enveloppe à soufflets. Le moule creux est positionné autour de la paraison 7 à l'état extrudé de celle-ci entre la tête d'injection et la filière de sorte que les plis de soufflets présentent un diamètre décroissant depuis la tête d'injection 3 jusqu'à la filière 2.

Ladite machine est équipée de moyens de soufflage 6 présentant un orifice de sortie 60 de soufflage débouchant à travers la zone délimitée par le périmètre interne de la cavité 30 annulaire de la tête 3, de manière à pouvoir souffler la paraison 7 afin de lui faire épouser la paroi de la cavité de moulage du moule creux 4. En variante, on pourrait prévoir que l'orifice de sortie 60 de soufflage débouche à travers la zone délimitée par le périmètre interne de l'orifice d'injection 22 annulaire de la filière 2.

Le procédé de fabrication du manchon 5 comprend les étapes principales suivantes.

Comme illustré à la figure 1, on forme la grande base 5A du manchon par injection de matière extrudable dans la cavité 30 annulaire de la tête d'injection 3. Ladite cavité 30 annulaire est configurée de telle sorte que ladite grande base 5A issue de l'injection de matière dans ladite cavité 30 présente une pluralité de lobes 51, 52, 53 internes, et une collerette 54 située en arrière des lobes 51, 52, 53 par référence à l'embouchure de la grande base 5A du manchon 5.

Une fois injectée la matière dans la cavité 30 pour former la grande base 5A, on procède, comme illustré à la figure 2, à l'extrusion d'un tube 7 de matière dont une extrémité est solidaire du périmètre interne de la collerette 54. Puis, un moule creux 4 est positionné autour de la paraison formé par le tube 7 de matière. Ladite paraison 7 est alors soufflée de sorte que la matière de la paraison est plaquée,sur la paroi de la cavité de moulage qui représente la surface externe de l'enveloppe à soufflets souhaitée (voir figure 3). Les flancs des plis s'étendent sensiblement dans une direction essentiellement radiale par rapport à l'axe longitudinal de ladite paroi. Les plis de soufflet ainsi obtenus présentent un diamètre décroissant depuis la grande base 5A vers l'extrémité opposée du corps de soufflet destinée à former la petite base.

La collerette est écartée de l'embouchure de la grande base du manchon. En particulier, ladite collerette est située dans la zone de liaison entre grande base et corps de soufflet.

Au cours du soufflage de la paraison pour former la série de plis de soufflet de manchon, la portion d'extrémité de la paraison 7, qui est reliée au pourtour interne de la collerette 54, vient doubler la collerette 54 en se rabattant, au cours de sa déformation par soufflage, contre la face de la collerette 54 côté paraison. Le plus souvent une bulle d'air est emprisonnée dans la zone de soudure entre la collerette et le pli de soufflet rabattu, ce qui est visible en coupe axiale du manchon comme illustré à la figure 4a.

Ainsi, la collerette 54 du manchon s'étend en saillie de la face interne du manchon 5, dans la zone de raccordement dudit pli de soufflet avec la grande base 5A dudit manchon 5. Autrement dit, la collerette 54 est doublée par la paroi externe d'un flanc d'un pli de l'enveloppe de soufflet, à savoir le pli le plus proche de la collerette, et en particulier le flanc dudit pli orienté vers ladite collerette.

Pour former la petite base 5B du manchon, on découpe une portion du corps du manchon opposée à l'extrémité formant grande base 5A et de diamètre correspondant au diamètre de la petite base 5B souhaitée, ce qui permet également de séparer le manchon 5 de la filière d'extrusion 2. La section transversale de la petite base 5B est circulaire et présente une épaisseur constante.

Du fait que le manchon est réalisé en commençant par former la grande base 5A par injection de matière dans la cavité de la tête d'injection, il apparait, comme détaillé ci-dessus, une collerette 54 en saillie de la face interne du manchon. La distance entre le pourtour interne de la collerette 54 et le pourtour externe de la grande base 5A est supérieur ou égal à la distance entre le pourtour externe de la grande base 5A et le sommet de chaque lobe 51, 52, 53.

Préférentiellement, on procède à la découpe du pourtour interne de la collerette, 54 formé par le bord libre de ladite collerette, sur une distance radiale donnée depuis ledit bord libre pour faciliter un débattement sur une plage angulaire donnée de l'arbre de transmission 9 équipé de l'organe mâle de liaison, formé de galets, qui coopère avec l'organe femelle formé par la tulipe, comme détaillé ci-après.

Avantageusement, la découpe du bord libre de ladite collerette 54 peut s'effectuer sur une partie seulement de la longueur radiale de la collerette, pour conserver une partie de collerette en saillie de la face interne du manchon, afin de former une butée axiale de limitation d'introduction de l'extrémité d'un arbre, par exemple pour former limitation d'introduction de la tulipe dans le manchon à travers la grande base. Cette distance entre pourtour interne ou bord libre de la collerette et pourtour externe de la collerette est appelée largeur de la collerette. La collerette peut quant à elle être encore appelée lèvre périphérique interne.

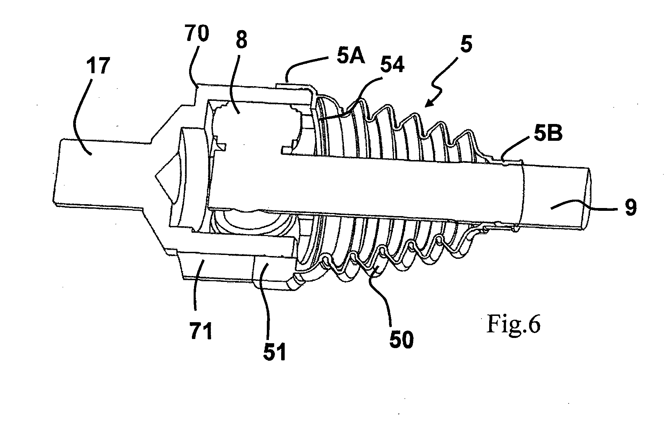

Comme illustré à la figure 6, le manchon obtenu permet de protéger une liaison mécanique articulée 70, 8 entre deux arbres de transmission 17, 9. Ladite liaison mécanique est formée d'une tulipe 70 qui équipe l'extrémité d'un premier arbre de transmission 17, par exemple issu d'une boite de vitesse, et d'un système à galets 8 formé de galets portés par des tourillons qui équipent l'extrémité d'un deuxième arbre de transmission 9. Les galets coopèrent avec des logements ménagés dans la paroi de la cavité délimitée par la tulipe 70 pour transmettre le couple du premier arbre 17 au deuxième arbre 9 tout en autorisant un débattement angulaire d'un angle donné autour d'un axe transversal à l'axe du premier arbre 17.

La grande base 5A du manchon est enfilée sur la face périphérique externe de la tulipe 70 par emboitement de forme de la face périphérique interne polylobée 51, 52, 53 avec les zone en creux 71 ménagées dans la face périphérique externe de la tulipe 70, ce qui permet d'empêcher la rotation du manchon par rapport à la tulipe 70.

A l'état enfilé de la grande base du manchon sur ladite tulipe, une bande de serrage est appliquée autour de la face périphérique externe circulaire de la grande base pour plaquer la face périphérique interne polylobée de cette grande base contre la face périphérique externe de la tulipe. La petite base du manchon est enfilée sur le deuxième arbre de transmission pourvu des galets logés à l'intérieur de la tulipe.

La collerette 54, située derrière les lobes 51, 52, 53 par référence à l'embouchure de la grande base 5A du manchon, forme alors butée de limitation d'introduction de la tulipe 70 dans le manchon. Comme rappelé ci-dessus, la découpe circonférentielle du pourtour interne de la collerette 54 sur une certaine distance permet d'augmenter l'espace de passage du deuxième arbre de transmission 9 qui traverse le manchon, pour faciliter son débattement angulaire par rapport au premier arbre de transmission 17. Le pourtour interne de la collerette 54 porte alors la marque d'une découpe circonférentielle.

Dans le cas où la collerette 54 est entièrement découpée, le manchon 5 présente également, dans la zone de raccordement d'un pli de soufflet avec la grande base 5A dudit manchon 5, la marque d'une découpe circonférentielle du côté de la face interne dudit manchon.

La présente invention n'est nullement limitée aux modes de réalisation décrits et représentés, mais l'homme du métier saura y apporter toute variante conforme à son esprit.

Dans l'exemple illustré aux figures, la paroi de fond de la partie 34 de la cavité qui définit la collerette est orthogonale à l'axe de la cavité annulaire. En variante, ladite paroi de fond définissant la collerette pourrait être inclinée d'un angle différent de 90° par rapport à l'axe de la cavité annulaire. Préférentiellement, la cavité qui définit la collerette est configurée de telle sorte que la collerette présente au moins une face orthogonale à l'axe du manchon.

## Revendications

1. Machine pour la fabrication d'un manchon (5), tel que soufflet d'étanchéité,
ledit manchon présentant un corps (50) de forme générale tronconique, formé d'une série de plis de soufflets et s'étendant entre une grande base (5A) et une petite base (5B) délimitant les ouvertures d'extrémité opposées dudit manchon,
ladite machine comprenant au moins :
- une filière d'extrusion (2) présentant un orifice d'injection (22) annulaire pour l'injection de matière extrudable,
- une tête dite d'injection (3) présentant une cavité (30) annulaire,
ladite tête d'injection (3) et la filière d'extrusion (2) étant montées déplaçables en translation l'une par rapport à l'autre, suivant une direction dite d'extrusion (A7), entre,
d'une part, une position rapprochée dans laquelle l'orifice d'injection (22) annulaire communique avec la cavité (30) annulaire de manière à injecter de la matière dans ladite cavité (30) annulaire pour former l'une desdites ouvertures d'extrémité du manchon,
et, d'autre part, une position écartée permettant au cours de l'écartement d'extruder un tube (7) de matière, appelé paraison, entre l'orifice d'injection (22) annulaire de la filière (2) et la cavité annulaire (30) de la tête d'injection (3),
le périmètre externe de la cavité (30) annulaire de la tête d'injection (3) étant supérieur au périmètre externe de l'orifice d'injection (22) annulaire de la filière (2) d'extrusion,
une partie de la cavité (30) annulaire étant configurée de manière à former, à l'état injecté de matière dans ladite cavité annulaire, une collerette (54) à l'intérieur de la grande base du manchon,
et en ce que, ladite machine comprenant des moyens de soufflage (6) de la paraison et un moule creux dont la cavité de moulage affecte la forme d'une série de plis de soufflets, ledit moule creux étant apte à venir, en position écartée de la tête d'injection (3) et de la filière d'extrusion (2), entre lesdites tête d'injection (3) et filière d'extrusion (2) et autour de la paraison (7) à l'état extrudé de celle-ci, de manière a permettre de souffler la paraison (7) pour lui faire épouser la paroi de la cavité de moulage, ladite machine étant **caractérisée en ce que** la cavité annulaire (30) de la tête d'injection (3) et la cavité de moulage du moule creux (4) sont configurées de telle sorte que, après soufflage de la paraison, un pli de soufflet du manchon est soudé contre une face de ladite collerette du manchon.

2. Machine selon la revendication 1, **caractérisée en ce que** la face périphérique interne (302, 303) de ladite cavité (30) annulaire comporte,
suivant l'axe (A7) de la cavité (30) annulaire, une partie circulaire (302) qui délimite le périmètre interne de la collerette (54) située du côté de l'embouchure de la cavité (30) et une autre partie dite lobée (303) qui présente au moins un renflement (31), tel que lobe, de préférence trois renflements,
le diamètre du cercle centré sur l'axe (A7) de la cavité (30) annulaire et inscrit dans la partie lobée (303) de la face périphérique interne de ladite cavité (30) annulaire étant supérieur ou égal au diamètre de la partie circulaire (302) de la face périphérique interne de la cavité (30).

3. Machine selon la revendication 2, **caractérisée en ce que** la partie lobée (303) et la partie circulaire (302) de la face périphérique interne (302, 303) sont séparées l'une de l'autre par un épaulement (300) de la face périphérique interne de ladite cavité (30) annulaire.

4. Machine selon l'une des revendications précédentes, **caractérisée en ce que** lesdits moyens de soufflage (6) comprennent un orifice de sortie (60) de soufflage débouchant, soit à travers la zone délimitée par le périmètre interne de l'orifice d'injection (22) annulaire de la filière (2), soit à travers la zone délimitée par le périmètre interne de l'embouchure de la cavité (30) annulaire de la tête (3), de manière à pouvoir souffler la paraison (7).

5. Manchon (5), tel que soufflet d'étanchéité, présentant un corps (50) de forme générale tronconique muni d'une série de plis de soufflets, s'étendant entre une grande base (5A) et une petite base (5B) délimitant les ouvertures d'extrémité opposées dudit manchon (5),
ladite grande base (5A) présentant au moins un renflement (51, 52, 53) interne, de préférence une pluralité de lobes,
**caractérisé en ce que** ledit manchon présente également une collerette (54) s'étendant en saillie de la face interne du manchon (5), dans la zone de raccordement d'un pli de soufflet avec la grande base (5A) dudit manchon (5), et **en ce qu'**un pli de soufflet du corps du manchon est soudé contre une face de la collerette.

6. Manchon selon la revendication 5, **caractérisé en ce que** le pourtour interne de la collerette (54) porte la marque d'une découpe s'étendant sur au moins une partie de la longueur dudit pourtour interne.

7. Procédé de fabrication d'un manchon (5), tel que soufflet d'étanchéité, de préférence conforme à la revendication 5, ledit manchon présentant un corps (50) de forme générale tronconique muni d'une série de plis de soufflets, s'étendant entre une grande base (5A) et une petite base (5B) délimitant les ouvertures d'extrémité opposées dudit manchon (5), ledit procédé comprenant les étapes suivantes, réalisées de préférence avec une machine selon l'une des revendications 1 à 4 :
- formation de la grande base (5A) du manchon et d'une collerette (54) interne à la grande base (5A), par injection de matière extrudable dans une cavité (30) annulaire d'un élément de moule, appelé tête d'injection,
- extrusion de matière pour former un tube (7), appelé paraison, dont une extrémité est liée à la matière injectée dans la cavité (30) annulaire,
- soufflage de la paraison (7) avec soudure d'un flan de pli de soufflet contre la collerette (54).

8. Procédé de fabrication selon la revendication 7,
**caractérisé en ce que** ledit procédé comprend en outre au moins une étape de découpe de la collerette (54) sur au moins une partie de son pourtour interne pour réduire, dans la zone découpée, la largeur de la collerette (54) correspondant à la distance entre pourtour interne et pourtour externe de ladite collerette (54).

## Patentansprüche

1. Maschine für die Herstellung einer Hülse (5) wie beispielsweise einer Dichtungsmanschette, wobei die Hülse einen allgemein kegelstumpfförmigen Körper (50) aufweist, der von einer Reihe von Manschettenfalten gebildet wird und sich zwischen einer großen Basis (5A) und einer kleinen Basis (5B) erstreckt, die die gegenüberliegenden Endöffnungen der Hülse begrenzen, wobei die Maschine mindestens umfasst:
- eine Extrusionsdüse (2), die eine ringförmige Einspritzöffnung (22) zum Einspritzen von extrudierbarem Material aufweist,
- einen Einspritzkopf (3), der einen ringförmigen Hohlraum (30) aufweist,
wobei der Einspritzkopf (3) und die Extrusionsdüse (2) im Verhältnis zueinander gemäß einer Extrusionsrichtung (A7) verschiebend verlagerbar montiert sind zwischen
einerseits einer angenäherten Stellung, in der die ringförmige Einspritzöffnung (22) mit dem ringförmigen Hohlraum (30) derart kommuniziert, dass Material in den ringförmigen Hohlraum (30) eingespritzt wird, um eine der Endöffnungen der Hülse zu bilden,
und andererseits einer beabstandeten Stellung, die während der Beabstandung erlaubt, einen Materialtubus (7), Vorformling genannt, zwischen der ringförmigen Einspritzöffnung (22) der Düse (2) und dem ringförmigen Hohlraum (30) des Einspritzkopfs (3) zu extrudieren,
wobei der äußere Umfang des ringförmigen Hohlraums (30) des Einspritzkopfs (3) größer ist als der äußere Umfang der ringförmigen Einspritzöffnung(22) der Extrusionsdüse (2),
wobei ein Teil des ringförmigen Hohlraums (30) derart konfiguriert ist, dass im eingespritzten Zustand von Material in den ringförmigen Hohlraum ein Kragen (54) in der großen Basis der Hülse gebildet wird,
und dass die Maschine Blasmittel (6) des Vorformlings und eine hohle Form umfasst, deren Formungshohlraum die Form einer Reihe von Manschettenfalten aufweist, wobei die hohle Form imstande ist, in beabstandeter Stellung des Einspritzkopfs (3) und der Extrusionsdüse (2) zwischen Einspritzkopf (3) und Extrusionsdüse (2) und um den Vorformling (7) im extrudierten Zustand desselben zu kommen, so dass erlaubt wird, den Vorformling (7) zu blasen, um diesen an die Wand des Formungshohlraums zu drücken,
wobei die Maschine **dadurch gekennzeichnet ist, dass** der ringförmige Hohlraum (30) des Einspritzkopfs (3) und der Formungshohlraum der hohlen Form (4) derart konfiguriert sind, dass nach dem Blasen des Vorformlings eine Manschettenfalte der Hülse gegen eine Fläche des Kragens der Hülse geschweißt wird.

2. Maschine nach Anspruch 1, **dadurch gekennzeichnet, dass** die innere Umfangsfläche (302, 303) des ringförmigen Hohlraums (30) gemäß der Achse (A7) des ringförmigen Hohlraums (30) einen kreisrunden Teil (302) aufweist, der den inneren Umfang des Kragens (54) begrenzt, der sich auf der Seite der Mündung des Hohlraums (30) befindet, und einen anderen gelappten Teil (303), der mindestens eine Verdickung (31) wie beispielsweise einen Lappen, vorzugsweise drei Verdickungen, aufweist,
wobei der Durchmesser des auf der Achse (A7) des ringförmigen Hohlraums (30) zentrierten und in den gelappten Teil (303) der inneren Umfangsfläche des ringförmigen Hohlraums (30) eingeschriebenen Kreises größer oder gleich dem Durchmesser des kreisförmigen Teils (302) der inneren Umfangsfläche des Hohlraums (30) ist.

3. Maschine nach Anspruch 2, **dadurch gekennzeichnet, dass** der gelappte Teil (303) und der kreisrunde Teil (302) der inneren Umfangsfläche (302, 303) durch einen Absatz (300) der inneren Umfangsfläche des ringförmigen Hohlraums (30) voneinander getrennt sind.

4. Maschine nach einem der vorangehenden Ansprüche, **dadurch gekennzeichnet, dass** die Blasmittel (6) eine Blasausgangsöffnung (60) umfassen, die entweder durch die Zone, die von dem Innenumfang der ringförmigen Einspritzöffnung (22) der Düse (2) begrenzt wird, oder durch die Zone, die von dem Innenumfang der Mündung des ringförmigen Hohlraums (30) des Kopfs (3) begrenzt wird, ausmündet, so dass der Vorformling (7) geblasen werden kann.

5. Hülse (5) wie eine Dichtungsmanschette, die einen allgemein kegelstumpfförmigen Körper (50) aufweist, der mit einer Reihe von Manschettenfalten ausgestattet ist, der sich zwischen einer großen Basis (5A) und einer kleinen Basis (5B) erstreckt, die die gegenüberliegenden Endöffnungen der Hülse (5) begrenzen,
wobei die große Basis (5A) mindestens eine innere Verdickung (51, 52, 53), vorzugsweise eine Vielzahl von Lappen, aufweist,
**dadurch gekennzeichnet, dass** die Hülse ebenfalls einen Kragen (54) aufweist, der aus der Innenfläche der Hülse (5) in die Verbindungszone einer Manschettenfalte mit der großen Basis (5A) der Hülse (5) herausragt,
und dass eine Manschettenfalte des Körpers der Hülse gegen eine Fläche des Kragens geschweißt ist.

6. Hülse nach Anspruch 5, **dadurch gekennzeichnet, dass** der innere Umfang des Kragens (54) die Markierung eines Ausschnitts trägt, der sich über mindestens einen Teil der Länge des inneren Umfangs erstreckt.

7. Herstellungsverfahren einer Hülse (5) wie beispielsweise einer Dichtungsmanschette vorzugsweise nach Anspruch 5, wobei die Hülse einen allgemein kegelstumpfförmigen Körper (50) aufweist, der mit einer Reihe von Manschettenfalten ausgestattet ist, der sich zwischen einer großen Basis (5A) und einer kleinen Basis (5B) erstreckt, die die gegenüberliegenden Endöffnungen der Hülse (5) begrenzen,
wobei das Verfahren die folgenden Schritte umfasst, die vorzugsweise mit einer Maschine nach einem der Ansprüche 1 bis 4 durchgeführt werden:
- Formen der großen Basis (5A) der Hülse und eines inneren Kragens (54) der großen Basis (5A) durch Einspritzen extrudierbaren Materials in einen ringförmigen Hohlraum (30) eines als Einspritzkopf bezeichneten Formelements,
- Extrusion von Material, um einen als Vorformling bezeichneten Tubus (7) zu bilden, von dem ein Ende mit dem in den ringförmigen Hohlraum (30) eingespritzten Material verbunden ist,
- Blasen des Vorformlings (7) mit Schweißen eines Manschettenfaltenabschnitts gegen den Kragen (54).

8. Herstellungsverfahren nach Anspruch 7,
**dadurch gekennzeichnet, dass** das Verfahren ferner mindestens einen Schritt des Ausschneidens des Kragens (54) über mindestens einen Teil seines inneren Umfangs umfasst, um in der ausgeschnittenen Zone die Breite des Kragens (54) entsprechend dem Abstand zwischen dem inneren Umfang und dem äußeren Umfang des Kragens (54) zu reduzieren.

## Claims

1. A machine for manufacturing a sleeve (5), such as a sealing bellows, said sleeve having a body (50) with a generally frustoconical shape, formed by a series of bellows folds and extending between a large base (5A) and a small base (5B) delimiting the opposite end openings of said sleeve, said machine comprising at least:
- an extrusion die (2) having an annular injection orifice (22) for injecting an extrudable material,
- a so-called injection head (3) having an annular cavity (30),
said injection head (3) and the extrusion die (2) being translatably mounted relative to one another, in a so-called extrusion direction (A7), between
on the one hand, a close position in which the annular injection orifice (22) communicates with the annular cavity (30) so as to inject material into said annular cavity (30) in order to form one of said end openings of the sleeve, and, on the other hand, a separated position making it possible, during the separation, to extrude a material tube (7), called a paraison, between the annular injection orifice (22) of the die (2) and the annular cavity (30) of the injection head (3),
the outer periphery of the annular cavity (30) of the injection head (3) being larger than the outer perimeter of the annular injection orifice (22) of the extrusion die (2),
part of the annular cavity (30) being configured so as to form, in the injected state of material in said annular cavity, a collar (54) inside the large base of the sleeve,
and in that, said machine comprising blowing means (6) for the paraison and the hollow mold whereof the molding cavity assumes the shape of a series of bellows folds, said hollow mold being able, in the separated position of the injection head (3) and the extrusion die (2), to come between said injection head (3) and extrusion die (2) and around the paraison (7) in the extruded state thereof, so as to make it possible to blow the paraison (7) to make it hug the wall of the molding cavity,
said machine being **characterized in that** the annular cavity (30) of the injection head (3) and the molding cavity of the hollow mold (4) are configured such that, after blowing of the paraison, a bellows fold of the sleeve is welded against a face of said collar of the sleeve.

2. The machine according to claim 1, **characterized in that** the inner peripheral face (302, 303) of said annular cavity (30) has, along the axis (A7) of the annular cavity (30), a circular part (302) that delimits the perimeter of the collar (54) situated on the side of the mouth of the cavity (30) and another so-called lobed part (303) that has at least one bulge (31), such as a lobe, preferably three bulges, the diameter of the circle centered on the axis (A7) of the annular cavity (30) and fitted in the lobed part (303) of the inner face of said annular cavity (30) being larger than or equal to the diameter of the circular part (302) of the inner peripheral face of said cavity (30).

3. The machine according to claim 2, **characterized in that** the lobed part (303) and the circular part (302) of the inner peripheral face (302, 303) are separated from one another by a shoulder (300) of the inner peripheral face of said annular cavity (30).

4. The machine according to one of the preceding claims, **characterized in that** said blowing means (6) comprise a blowing outlet orifice (60) emerging either through the zone delimited by the inner perimeter of the annular injection orifice (22) of the die (2), or through the zone delimited by the inner perimeter of the mouth of the annular cavity (30) of the head (3), so as to be able to blow the paraison (7).

5. A sleeve (5), such as a sealing bellows, having a body (50) with a generally frustoconical shape, provided with a series of bellows folds, extending between a large base (5A) and a small base (5B) delimiting the opposite end openings of said sleeve (5), said large base (5A) having at least one inner bulge (51, 52, 53), preferably a plurality of lobes,
**characterized in that** said sleeve also has a collar (54) extending protruding from the inner face of the sleeve (5), in the connection zone of a bellows fold with the large base (5A) of said sleeve (5),
and **in that** a bellows fold of the body of the sleeve is welded against a face of the collar.

6. The sleeve according to claim 5, **characterized in that** the inner perimeter of the collar (54) bears the mark of a cutout extending over at least part of the length of said inner perimeter.

7. A method for manufacturing a sleeve (5), such as a sealing bellows, preferably according to claim 5, said sleeve having a body (50) with a generally frustoconical shape provided with a series of bellows folds, extending between a large base (5A) and a small base (5B) delimiting the opposite end openings of said sleeve (5),
said method comprising the following steps, preferably carried out using a machine according to one of claims 1 to 4:
- formation of the large base (5A) of the sleeve and of a collar (54) inside the large base (5A), by injecting an extrudable material into an annular cavity (30) of a mold element, called injection head,
- extrusion of material to form a tube (7), called a paraison, one end of which is connected to the material injected into the annular cavity (30),
- blowing of the paraison (7) with welding of a bellows fold blank against the collar (54).

8. The manufacturing method according to claim 7,
**characterized in that** said method further comprises at least one step for cutting the collar (54) on at least part of its inner perimeter to reduce, in the cut zone, the width of the collar (54) corresponding to the distance between the inner perimeter and outer perimeter of said collar (54).
